# EUROPEAN PATENT APPLICATION

(11) **EP 4 553 493 A1**
(43) Date of publication of application: **14.05.2025**
(21) Application number: 24769979.6
(22) Date of filing: 14.03.2024
(51) Int. Cl.: G01N 30/06, G01N 30/02

(54) **METHOD FOR TREATING SAMPLE FOR LIQUID CHROMATOGRAPHY AND MASS SPECTROMETRY**

(30) Priority: 15.03.2023 CN 202310269519
(71) Applicant: Beijing GBI Biotechnology Co., Ltd., Beijing 101300 (CN)
(72) Inventor: ZHANG, Shenyan, Beijing 101300 (CN); LI, Ning, Beijing 101300 (CN); LI, Honge, Beijing 101300 (CN); LI, Qianqian, Beijing 101300 (CN); ZHANG, Wei, Beijing 101300 (CN); WANG, Xiaolu, Beijing 101300 (CN); TONG, Xihai, Beijing 101300 (CN); HAN, Shan, Beijing 101300 (CN)
(74) Representative: Völkl Siebenson Patentanwälte - Partnerschaft mbB
(86) International application number: PCT/CN2024/081574
(87) International publication number: WO 2024/188289

(57) **Abstract**

A method for treating a sample for liquid chromatography and mass spectrometry and a use of surface hydrophilic magnetic beads for treating a sample for liquid chromatography and mass spectrometry. The method comprises contacting a sample by using surface hydrophilic magnetic beads and a precipitant to form precipitated-magnetic bead aggregates, and applying a magnetic field to remove the precipitated-magnetic bead aggregates. The described sample treatment method may be used in sample preparation or pretreatment for mass spectrometry or liquid chromatography, especially liquid chromatography tandem mass spectrometry.

## Description

### FIELD

The present disclosure relates to the technical field of biology, and in particular to a method for treating a sample for liquid chromatography and mass spectrometry.

### BACKGROUND

Biological samples usually refer to body fluids (such as whole blood, plasma, serum, urine, cerebrospinal fluid, saliva, tear, bile, gastric juice, tissue fluid, lymph and other secretions of organisms), muscles, hair, and some tissues and organs (such as liver, lung, kidney, brain, stomach, thymus, and pancreas) that originate from animals (including humans). Biological samples, especially clinical samples, have complex compositions, especially the protein components therein, which are prone to interfering with subsequent analysis and detection. Therefore, the sample pretreatment is necessary prior to analysis and detection to remove protein impurities.

Sample pretreatment is an important step in bioanalysis. It is necessary to pretreat biological sample before analysis and detection for liquid chromatography, mass spectrometry, especially liquid chromatography tandem mass spectrometry (LC-MS/MS) in clinical test. The main objective of sample pretreatment is to separate one or more target analytes from a sample matrix containing undesired components. Sample pretreatment is a very important part in the development and optimization of LC-MS/MS method. Mostly, sample pretreatment has been regarded as the bottleneck of the high-throughput detection and is the main source of analytical error. Inappropriate sample pretreatment often leads to suppression of target analyte signals or interference from co-existing substances in the biological matrix, resulting in a failed LC-MS/MS assay. In particular, unprocessed impurities in the sample may contaminate the analytical pipeline. For example, insoluble substances (such as impurity proteins) may clog the pipeline or chromatography column after entering the LC-MS system, and thus affecting the analysis.

Sample pretreatment methods in the prior art include centrifugation, standing, protein precipitation (PPT), liquid-liquid extraction (LLE), solid phase extraction (SPE), and the like. However, the pretreatment methods in the prior art have disadvantages, including cumbersome operations, time-consuming processes, and inability to automate.

For example, although the centrifugation or standing currently commonly used can remove protein impurities, the process is cumbersome and difficult to be automated. Moreover, the standing is time-consuming.

CN113376270B discloses a pretreatment method for detecting a sample serum via protein precipitation by high performance liquid chromatography tandem mass spectrometry, comprising a processing step with a negative pressure device. This method has simple operations, but results in a low concentration of the substance to be measured in the sample on the instrument, as the protein precipitation is essentially a dilution of the sample. This method also has a high requirement on the sensitivity of the instrument. Moreover, the negative pressure operation required for this method makes it difficult to achieve a fully automated process.

CN110779780A discloses a pretreatment method for detecting a serum sample by high performance liquid chromatography tandem mass spectrometry, which comprises adopting ethanol for protein precipitation, adopting hexane for liquid-liquid extraction, adopting nitrogen to blow the extract to dryness, and re-dissolving the sample before sample loading and analysis. This method involves multiple steps such as extraction and nitrogen blowing, which require a large number of manual operations and are not conducive to processing automation; moreover, the operation process is cumbersome and has high requirements for experimental personnel.

CN111198238A discloses a method for extracting and detecting samples from serum, which adopts protein precipitation and solid phase extraction. However, in the experiment, the packing used in solid phase extraction may experience swelling after contacting an organic reagent, which may affect the flow rate of the solution through the packing, thereby causing the poor pore size uniformity, and is not conducive to processing automation due to dryness process under nitrogen blowing.

Therefore, pretreatment methods for removing protein from a sample in the prior art have obvious deficiencies including excessive manual operations and time consumption, which makes it difficult to realize automated and rapid sample processing and fails to meet the needs in tests. In particularly, test practices particularly clinical testing practices objectively urgently require an automated method for achieving efficient removal of protein impurities from samples.

### SUMMARY

The present inventors have discovered through extensive experimental studies that contacting a sample with a magnetic bead with a hydrophilic surface (in particular a silica magnetic bead) and a precipitant are effective in the removal of impurities from the sample for liquid chromatography and mass spectrometry, which is conducive to operation automation.

Based on this finding, in a first aspect of the present disclosure, provided is a method for treating a sample for liquid chromatography and mass spectrometry, comprising contacting the sample with a surface-hydrophilic magnetic bead and a precipitant to form a precipitate-magnetic bead aggregate, and applying a magnetic field to remove the precipitate-magnetic bead aggregate.

The magnetic bead with a hydrophilic surface of the present disclosure is a magnetic particle which has a magnetic core and a coating material coated on the surface of the magnetic core. The coating material is hydrophilic, and it may be silica or modified silica (e.g., amino-modified silica, carboxyl-modified silica, or silica (i.e., unmodified bare silica )). As used herein, the term "silica magnetic bead" refers to a magnetic bead containing a magnetic core coated with a silica layer. As used herein, a "magnetic bead with a hydrophilic surface" or "surface-hydrophilic magnetic bead" may be, for example, a silica magnetic bead with a hydrophilic surface. Silica magnetic beads may include magnetic beads of which the silica surface is further functionally modified, such as amino-modified silica magnetic beads, carboxyl-modified silica magnetic beads, and hydroxyl-modified silica magnetic beads, magnetic beads that are not functionally modified as described above are "unmodified bare silica magnetic beads" as described herein.

Preferably, the magnetic bead has a suitable particle size. For example, it has an average particle size of 0.1 to 300 µm, 0.2 to 250 µm, 0.3 to 200 µm, 0.4 to 150 µm, 0.5 to 100 µm, 0.6 to 80 µm, 1 to 200 µm, 10 to 100 µm, or 30 to 50 µm.

In the context of the present disclosure, the "sample" means the product form from which the ingredient to be tested is derived. In this context, the sample may be a biological sample, such as a clinical sample, preferably a sample selected from the group consisting of whole blood, plasma, serum, urine, cerebrospinal fluid, saliva, tear, bile, gastric juice, tissue fluid and lymph fluid. The sample may comprise a biological material selected from the group consisting of whole blood, plasma, serum, urine, cerebrospinal fluid, saliva, tear, bile, gastric juice, tissue fluid and lymph fluid. In the context herein, the sample further includes a biological material after treatment, such as whole blood, plasma, serum, urine, cerebrospinal fluid, saliva, tear, bile, gastric juice, tissue fluid and lymph fluid after treatment.

In the present disclosure, the magnetic core of the magnetic bead comprises magnetic particles. The magnetic particles may consist of any substance having magnetic property, preferably selected from the group consisting of an oxide of iron, cobalt and nickel, and more preferably ferroferric oxide. It is known in the art that the magnetic core can be prepared by any suitable methods.

In the present disclosure, the contacting a sample with a magnetic bead with a hydrophilic surface and a precipitant can be carried out by:
(1) contacting the sample with a precipitant to form a precipitate, and contacting the precipitate with the magnetic bead with a hydrophilic surface to form a precipitate-magnetic bead aggregate, or,
(2) contacting the sample with the magnetic bead with a hydrophilic surface and the precipitant together to form a precipitate-magnetic bead aggregate.

Preferably, the contacting a sample with a magnetic bead with a hydrophilic surface and a precipitant is carried out by contacting the sample with the magnetic bead with a hydrophilic surface and the precipitant together.

As used herein, "contacting the sample with the magnetic bead with a hydrophilic surface and the precipitant together" means exposing the magnetic bead with a hydrophilic surface and the precipitant together to the sample, wherein there is no apparent sequential difference in the timing of the exposure of the magnetic bead to the sample and of the precipitant to the sample. In a more specific embodiment, the magnetic bead and the precipitant substantially concurrently contact with the sample, but it is not required that the contact occur at the same time in the strict sense.

As used herein, the "magnetic bead with a hydrophilic surface" is preferably a silica magnetic bead with a hydrophilic surface.

As used herein, the "contacting a sample with a magnetic bead with a hydrophilic surface and a precipitant" may further comprise the following steps: mixing, shaking, oscillating, performing vortex and/or stirring a mixture of the sample, the magnetic bead and the precipitant

Without being limited by theory, in the present disclosure, after bring the precipitant in contact with the sample, impurities (e.g., proteins) in the sample form a precipitate. When magnetic beads are present in the system, the precipitate may simultaneously or subsequently contact with the magnetic beads with a hydrophilic surface and encapsulate the magnetic beads to form precipitate-magnetic bead aggregates.

In some embodiments, the precipitant includes a protein precipitating agent. As is known to those skilled in the art, a protein precipitating agent is a substance that precipitates proteins in a sample, including a substance that dehydrates proteins to precipitate them, for example an organic solvent, such as acetonitrile, methanol, and ethanol, preferably acetonitrile. Optionally, the protein precipitating agent may also include, for example, organic solvents that are not miscible with water (such as alkanes/cycloalkanes and ethyl acetate). Other suitable precipitating agents known to those skilled in the art may also be used. Without being limited by theory, in the present disclosure, the addition of a precipitant is intended to prevent insoluble substances in the sample from entering the LC/MS analysis system and clogging the pipeline and chromatography column, thereby affecting the analysis results.

The present inventors have further discovered through research that the removal of formed precipitates (precipitate-magnetic bead aggregates) can be achieved by applying a magnetic field. For example, by applying a magnetic field, it is possible to achieve rapid and efficient transfer of samples, especially liquids (including solutions or suspensions), and also to avoid problems including clogging a chromatography column caused by the residual magnetic material during the course of transfer. Based on this finding, it is particularly practicable to automate the removal of precipitated impurities under an applied magnetic field.

Accordingly, the method of the present disclosure comprises applying a magnetic field to remove the precipitate-magnetic bead aggregate. More specifically, the applying a magnetic field to remove the precipitate-magnetic bead aggregate can be achieved by placing a magnet on the outside of a wall of a container containing a sample such that the magnetic beads bound to the precipitate are attracted to the inner side of the wall of the container by the action of the applied magnetic field (for example, the sample may be separated from the magnetic beads bound to the precipitate by aspirating a sample solution or suspension). Alternatively, it can be achieved by inserting the magnet into the container containing the sample to adsorb the magnetic beads bound to the precipitate and removing the magnet. In some embodiments, the applying a magnetic field to remove the precipitate-magnetic bead aggregate is achieved by removing the sample solution from the container containing the sample and the magnetic beads, or by removing the magnetic beads bound to the precipitate from the container containing the sample and the magnetic beads.

The magnet may be a permanent magnet or an electromagnet, preferably an electromagnet, wherein the presence and disappearance of the magnetic field may be controlled conveniently by on-off of an electric current. In the case of an electromagnet, the on-off of an electrical current of the electromagnet can also be controlled by means of a programmable logic controller (PLC), in order to adapt to the need for full automation of the sample processing.

In specific operations, the magnet may be placed or inserted into a solution or suspension containing the sample.

In one embodiment, the applying a magnetic field to remove the precipitate-magnetic bead aggregate is achieved by placing a magnet on the outside of a wall of a container containing a sample such that the magnetic beads bound to the precipitate (i.e., the precipitate- magnetic bead aggregates) are attracted to the inner side of the wall of the container by the action of the applied magnetic field. In a more specific embodiment, the magnet can be placed in two positions that is, a side position and a bottom position. For a magnet placed in the side position, the magnet is placed outside the side wall of the container containing the solution or suspension of the sample, such that the magnetic beads binding the precipitate are attracted to the inner side of the wall of the container by the action of the applied magnetic field (for example by switching on the power supply of an electromagnet or moving a permanent magnet). For a magnet placed in the bottom position, the magnet is placed below the bottom wall of the container containing the solution or suspension of the sample, such that the magnetic beads binding the precipitate are attracted to the bottom wall of the container by the action of the applied magnetic field (for example by switching on the power supply of an electromagnet or moving a permanent magnet). In some embodiments, the magnet may be only placed in the side position. In some other embodiments, the magnet may be only placed in the bottom position. In some embodiments, magnets can be placed in the side position and the bottom position.

By switching the power-on/off state of the magnet and/or changing the position of the magnet in conjunction with the operation of transferring a liquid (e.g., a solution), automated transfer of a liquid (e.g., a solution) between different containers can be efficiently realized.

In addition, in terms of applying a magnetic field by placing a magnet outside the side wall of a container containing a solution or suspension of a sample to attract magnetic beads bound to the precipitate to the inner side wall of the container and thereby to perform removal of the precipitated impurities (such as proteins), a liquid can be efficiently transferred by placing the magnet in the "side position" in the present disclosure. Compared to the magnet is placed below the bottom wall of the container (in the "bottom position"), when the magnet is placed in the side position, the shortcomings of the magnetic field applied to bottom position can be more effectively overcome, including loss of liquid (sometimes insufficient aspiration of liquid at the bottom) and residual magnetic material and/or clogging of the chromatography column when the magnetic materials are moved away, which facilitates transfer operation and automation.

Based on the above findings, the applying a magnetic field to remove the precipitate-magnetic bead aggregate in the method of the present disclosure is achieved by placing a magnet on the outside of a wall of a container containing a solution or suspension of a sample (preferably outside of the side wall of the container) such that the magnetic beads bound to the precipitate are attracted to the inner side of the container wall (preferably inner side of the side wall) by the action of the applied magnetic field, or by inserting the magnet (e.g., a magnetic rod) into the solution or suspension of the sample to adsorb the magnetic beads bound to the precipitate and removing the magnet.

In the method of the present disclosure, the container can be a perforated plate or a seperate tube. The perforated plate can be, for example a 2-well plate, a 4-well plate, a 6-well plate, a 12-well plate, a 24-well plate, a 48-well plate, and a 96-well plate. The container may have a U-shaped or V-shaped bottom.

In some embodiments of the present disclosure, transferring (moving and/or separating) the sample in the method is achieved by aspirating a liquid (or fluid) from one container and releasing the liquid (or fluid) to another container.

In the method of the present disclosure, the transfer of sample between different containers can be achieved with a pipette by making it moving up and down in the containers. Preferably, the pipette base is provided with an elastic element that allows the pipette tip to retract elastically when it moves down to contact the bottom of the container. Preferably, the pipette base is provided with an adjusting structure that makes it possible to adjust the stopping position of the pipette tip in order to get as close as possible to the bottom of the container without damaging the pipette and/or the container.

The present disclosure further provides a method for detecting a sample comprising pretreating the sample by the above method. Based on this, the present disclosure relates to a method for detecting a sample comprising a step of analyzing the pretreated sample by an analytical method. Preferably, the analytical method is selected from the group consisting of mass spectrometry, liquid chromatography, liquid chromatography mass spectrometry (LC-MS) and liquid chromatography tandem mass spectrometry (LC-MS/MS). In the method of analyzing the sample of the present disclosure, in one embodiment, the method comprises a step of mixing the sample with a solution or suspension of an internal standard before pretreating and analyzing.

The present disclosure further provides a kit for use in the sample pretreatment for detection comprising a magnetic bead with a hydrophilic surface (such as a silica magnetic bead, in particular a bare silica magnetic bead without surface modification) and optionally a reference substance. Specifically, the kit is useful in mass spectrometry or liquid chromatography.

The kit of the present disclosure can be used in the method of pretreating a sample or the method of detecting a sample.

In another aspect of the preset disclosure, provided is use of a magnetic bead with a hydrophilic surface (such as a silica magnetic bead, in particular a bare silica magnetic bead without surface modification) in the removal of impurity proteins from a sample.

By adopting the method of the present disclosure, the centrifugation, sonication and nitrogen blowing usually employed in the prior art, can be avoided, thus the automation of the operation can be greatly improved, labor can be saved, the operation time can be reduced, and the treatment efficiency can be significantly improved.

### Term explanation

As used herein, the terms "magnetic bead" and "magnetic particle" mean particles with magnetic properties, and they can be used interchangeably.

As used herein, the "magnetic bead with a hydrophilic surface" refers to a magnetic particle having a magnetic core and a coating material coated on the surface of the magnetic core, and the coating material is hydrophilic. The coating material can be silica or modified silica, such as amino-modified silica or carboxyl-modified silica. The magnetic bead with a hydrophilic surface used herein is preferably a silica magnetic bead, in particular a bare silica magnetic bead without surface modification.

As used herein, "contacting a sample with a magnetic bead with a hydrophilic surface and a precipitant" means exposing the sample to the magnetic bead and the precipitant for their interaction. The contacting may be sequential, for example first exposing the sample to the precipitant and then exposing the precipitate to the magnetic bead. The contacting may also be non-sequential, meaning that they may be contacted together. The present inventors have unexpectedly found that the concurrent contacting of bring the magnetic bead with a hydrophilic surface and the precipitant into contact with the sample together to form a precipitate-magnetic bead aggregate is not less effective than the sequential contacting of first bring the sample into contact with the precipitant and then the precipitate into contact with the magnetic bead, and this processing of concurrent contacting is conducive to the operation automation and time-saving.

As used herein, the "particle size" means the average particle size of a particle population. Measurement methods for particle size include sieving, microscopy, sedimentation and electroresistance method.

As used herein, "liquid chromatography" means a chromatography assay using a liquid as the mobile phase, and its solid phase can be in various forms. "Mass spectrometry" means a method wherein ions in motion (including charged atoms, molecules or molecular fragments, molecular ions, istopic ions, fragment ions, rearrangement ions, multiply charged ions, metastable ions, negative ions, and ions generated by ion-molecule interactions) are separated according to the mass-to-charge ratio of ions by using an electric field and a magnetic field and then detected. The liquid chromatography or mass spectrometry in the present disclosure also includes a combination form thereof, for example liquid chromatography-mass spectrometry (LC-MS) and liquid chromatography-tandem mass spectrometry (LC-MS/MS).

As used herein, the term "silica-based magnetic bead" and "silica magnetic bead" have the same meaning and can be used interchangeably.

As used herein, the term "selected from" means either one of the options listed thereafter or a combination of one or more of those options.

As used herein, the "sample" refers to the object to be tested, which can be a biological sample, such as a clinical sample, including whole blood, plasma, serum, urine, cerebrospinal fluid, saliva, tear, bile, gastric juice, tissue fluid, and lymph, and the "sample" can be a biological material selected from the group consisting of whole blood, plasma, serum, urine, cerebrospinal fluid, saliva, tear, bile, gastric juice, tissue fluid, and lymph fluid. The sample may be any combination of the above. The sample may be in liquid or fluid form or even in solid form. Samples in solid form can optionally be processed for testing, such as homogenization.

### BRIEF DESCRIPTION OF DRAWINGS

FIG. 1 is a schematic diagram of the magnet placed in the side position in the present disclosure.
FIG. 2 is a schematic diagram of the magnet placed in the bottom position in the present disclosure.

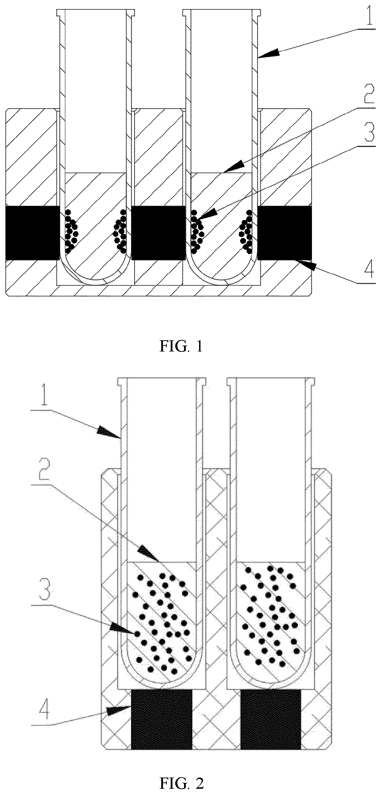

In FIG. 1, the magnet 4 is placed in the outer side of the side wall of the container 1 (orifice plate), and the container 1 contains a solution or suspension 2 of a sample. Under the action of the external magnetic field of the magnet 4 in the side position, the magnetic beads 3 are aggregated and fixed to the side wall of the container 1, thus not affecting the transfer of the solution or suspension 2, and ensuring complete transfer of the liquid in the container 1.
In FIG. 2, the magnet 4 is placed in a position below the bottom wall of the container 1 (orifice plate), and the container 1 contains a solution or suspension 2 of a sample. When the magnet 4 is in the bottom position, the solution or suspension 2 of a sample in the container 1 can be stirred or oscillated.

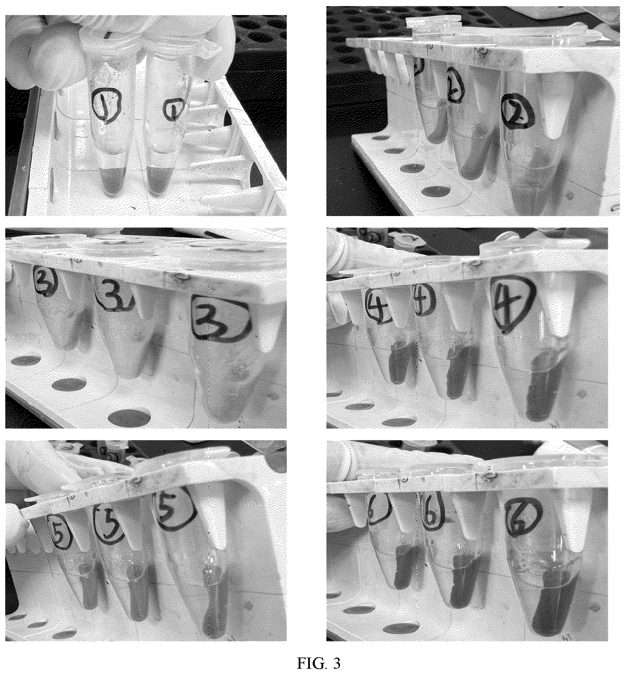

FIG. 3 shows the effect of different types of magnetic beads on the impurity removal, where the number labeled on the container represents the type of magnetic beads.

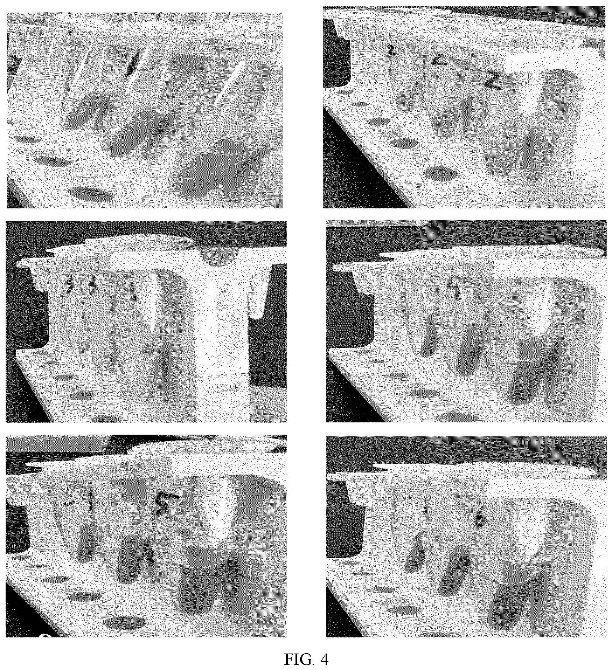

FIG. 4 shows the effect of different adding sequences on the impurity removal effect of magnetic beads, where the number labeled on the container represents the type of magnetic beads.

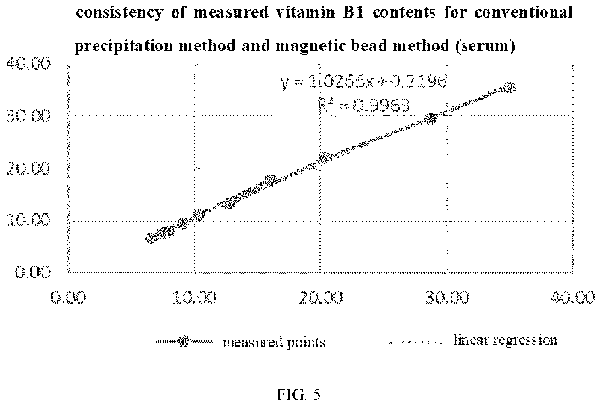

FIG. 5 shows the consistency of the measurement results of vitamin B1 content in 10 serum samples using the magnetic bead method of the present disclosure and the conventional precipitation method in Example 3.

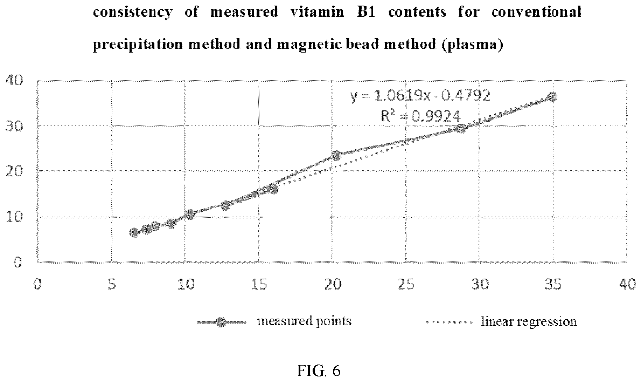

FIG. 6 shows the consistency of the measurement results of vitamin B1 content in plasma samples using the magnetic bead method of the present disclosure and the conventional precipitation method in Example 4.

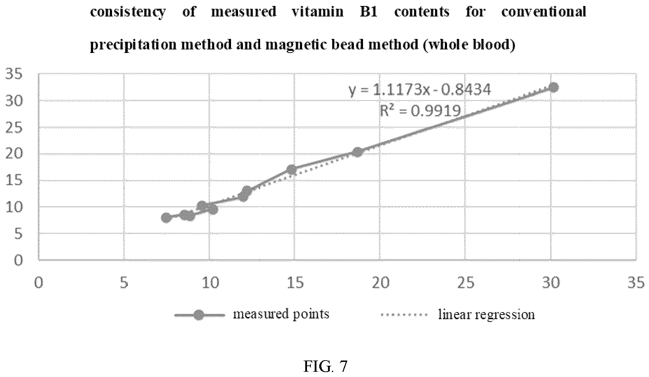

FIG. 7 shows the consistency of the measurement results of vitamin B1 content in whole blood samples using the magnetic bead method of the present disclosure and the conventional precipitation method in Example 4.

### DETAILED DESCRIPTION

In the following examples, unless otherwise specified, the reagents and instruments used are those commonly used in the art, which can be purchased from chemical or biological product/preparation companies. The methods used in the following examples are conventional methods in the art, and those skilled in the art can undoubtedly know the operating procedures of these experiments and obtain the corresponding results based on the prior art or the operation manuals provided by the manufacturers.

### Examples

The sources of materials and reagents, and instrument models used in the present disclosure are described below.

**Table 1 Brand and model of instrument**

| Instrument | Brand | Model |
|---|---|---|
| Liquid Chromatography Tandem Mass Spectrometry System | AB Sciex | AB SCIEX Triple Quad^{™} 4500MD |

The magnetic beads used in the examples of the present disclosure are described below.

The impurity-removal magnetic bead 1 and impurity-removal magnetic bead 2 were purchased from Suzhou Yingruicheng Biochemical Technology Co., Ltd. They are superparamagnetic materials with a core-shell structure, with a superparamagnetic ferroferric oxide core and a silica layer with a surface modification of coupling a functional group (including an amino group and a carboxyl group) as the shell layer. Wherein, the edulcoration magnetic bead 1 is a mixed magnetic bead of amino-modified magnetic bead and carboxyl-modified magnetic bead in a ratio of amino: carboxyl = 6:4. For the impurity-removal magnetic bead 2, the ratio of primary- and secondary amine- modified beads in the mixed magnetic bead was increased compared to the impurity-removal magnetic bead 1. The impurity-removal magnetic bead 1 and impurity-removal magnetic bead 2 used in this example were both purchased from Suzhou Yingruicheng Biochemical Technology Co., Ltd., with the model of MSi050/FLD01 and MSi050/FLD02, respectively.

Carboxyl silica magnetic beads have a superparamagnetic ferroferric oxide core and a silica shell layer with a carboxyl-modified silica surface. The carboxyl silica magnetic beads used in the examples were purchased from Suzhou Yingruicheng Biochemical Technology Co., Ltd., with the model of MSi050/WCX, which were hydrophilic polymer magnetic beads of 1.5µm size, and had a sandwich-type structure. The interior was a porous polymer microsphere core, the exterior was coated with polymer layer made of different materials for satisfying variable applications, and the magnetic material was filled in the pores between the two, with a model/cat. number of MPHCC-150.

Amino silica magnetic beads have a superparamagnetic ferroferric oxide core and a silica shell layer with an amino-modified silica surface. The amino silica magnetic beads used in the examples were purchased from Suzhou Yingruicheng Biochemical Technology Co., Ltd., with the model of MSi050/WAX.

Carboxyl agarose magnetic beads have a superparamagnetic ferroferric oxide core and an agarose shell layer with a carboxyl-modified surface, which can be prepared with reference to CN113181883A. The carboxyl agarose magnetic beads used in the examples were purchased from Suzhou Yingruicheng Biochemical Technology Co., Ltd., with the model of MAgr100K/WCX.

Bare silica magnetic beads with an unmodified surface have a superparamagnetic ferroferric oxide core and a silica shell layer with an unmodified surface. Bare silica magnetic beads with an unmodified surface used in the examples were purchased from Suzhou Yingruicheng Biochemical Technology Co., Ltd., with the model of EM001.

### Example 1 Effect of different types of magnetic beads on protein removal

Types of magnetic beads used
(1) Impurity-removal magnetic bead 1
(2) Impurity-removal magnetic bead 2
(3) Carboxyl agarose magnetic beads
(4) Carboxyl silica magnetic beads
(5) Amino silica magnetic beads
(6) Bare silica magnetic beads with an unmodified surface
(7) PS magnetic beads (a matrix of polystyrene and divinylbenzene, purchased from Suzhou Agilebio, a neutral reversed-phase adsorptive magnetic extraction material of styrene/divinylbenzene, model/cat. number: BNMA12300010-0)
(8) C18 magnetic beads (silica matrix, 20-40 µm, purchased from Suzhou Agilebio, model/cat. number: BNMS9300001-0)

### A. Protein precipitant: acetonitrile

### Sample processing

200 µL of acetonitrile precipitant was added to 100 µL of serum samples (3 parallels per sample) and mixed well through vortex, and then 50 µL of magnetic bead working solution (1 mg magnetic beads in 50% methanol solution) was added and mixed well through vortex. Precipitate was adsorbed to the magnetic beads under applied magnetic field, and the supernatant was aspirated and transferred to a microplate reader, and the absorbance was read at the wavelength of 620 nm.

### Conclusion

Magnetic bead types (1)-(2) and (4)-(6) can effectively achieve the capture and removal of precipitates (mainly comprising proteins), while magnetic bead type (3) (carboxyl agarose magnetic beads) showed poor performance in capturing precipitates.

### B. Protein precipitants: acid precipitant 1 (10% TCA) and acid precipitant 2 (10% TCA: pure methanol = 6:4)

### Sample processing

250 µL of acid precipitant (acid precipitant 1 or acid precipitant 2) was added to 250 µL of serum sample and mixed well through vortex. 40 µL (4 mg) of magnetic bead working solution was added and mixed well through vortex. The magnetic field was applied for adsorbing and the supernatant was taken, wherein the magnetic bead types (1), (4), (5), (7) and (8) listed above were used.

As seen from the results, the purity-removal magnetic bead 1, amino silica magnetic beads and carboxyl silica magnetic beads showed a significant protein adsorption effect. For the purity-removal magnetic bead 1, amino silica magnetic beads and carboxyl silica magnetic beads, after addition of the two precipitants, precipitate-magnetic bead aggregates were formed, and adsorbed to the side wall, and the liquid was clarified. After the supernatant was pipetted and loaded, no clogging of the chromatography column was observed and the column pressure was normal before and after loading of the supernatant. The supernatant taken was centrifuged (4000g, 10 min), no visible precipitate formed and the liquid was clarified without protein production, indicating efficient protein adsorption.

For PS magnetic beads, after addition of the acid precipitant 1 or acid precipitant 2, the formed precipitate-magnetic bead aggregates inflated, and part of the precipitate- bead aggregates were adsorbed magnetically to the side wall, the liquid showed a slightly poor clarification and the adsorption effect was poor.

For C18 magnetic beads, after addition of the acid precipitant 1 or acid precipitant 2, no precipitate-magnetic bead aggregates was formed, protein and magnetic beads were not aggregated together, indicating a poor adsorption effect.

The above results indicate that magnetic beads with poor surface hydrophilicity (such as PS magnetic beads and C18 magnetic beads) are not effective enough for protein precipitation. However silica magnetic beads with hydrophilic surface can effectively form precipitate-magnetic bead aggregates to effectively precipitate protein.

### Example 2 Influence of different addition sequences on the effect of magnetic beads in capturing proteins

### Types of magnetic beads

The types of magnetic beads used were the same as the magnetic bead types (1)-(6) in Example 1.

### Protein precipitant: acetonitrile

### Example 2-A (addition of protein precipitant prior to magnetic beads):

200 µL of acetonitrile precipitant was added to 100 µL of serum samples (3 parallels per sample) and mix well through vortex. 50 µL of magnetic bead working solution (comprising 1 mg of magnetic beads, 50% methanol solution) was added and mixed well through vortex. The external magnetic field was applied to allow the precipitated protein to adhere to the magnetic beads, the supernatant was aspirated and transferred to a microplate reader, and the absorbance was read at the wavelength of 420 nm.

### Example 2-B (simultaneous addition):

250 µL of acetonitrile solution containing magnetic beads was added to 100 µL of serum samples (3 parallels for each sample) and mixed well through vortex. The external magnetic field was applied to allow the precipitated protein to adhere to the magnetic beads, the supernatant was aspirated and transferred to a microplate reader, and the absorbance was read at the wavelength of 420 nm.

### Experimental results

**Table 2 Influence of different sample loading sequence**

| Result from the micro plate | Magnetic bead 1 | Magnetic bead 2 | Magnetic bead 3 | Magnetic bead 4 | Magnetic bead 5 | Magnetic bead 6 |
|---|---|---|---|---|---|---|
| Separation addition of precipitant and magnetic beads | 0.036 | 0.043 | 0.069 | 0.045 | 0.063 | 0.042 |
| | 0.039 | 0.042 | 0.058 | 0.043 | 0.040 | 0.040 |
| | 0.038 | 0.063 | 0.065 | 0.049 | 0.044 | 0.046 |
| mean | 0.038 | 0.049 | 0.064 | 0.046 | 0.049 | 0.043 |
| simultaneous addition of precipitant and magnetic beads | 0.065 | 0.063 | 2.051 | 0.042 | 0.037 | 0.059 |
| | 0.037 | 0.047 | 0.856 | 0.046 | 0.037 | 0.046 |
| | 0.040 | 0.055 | 2.024 | 0.045 | 0.039 | 0.042 |
| mean | 0.047 | 0.055 | 1.644 | 0.044 | 0.038 | 0.049 |

### Experimental Conclusion

1. Magnetic bead types (1)-(2) and (4)-(6) can effectively achieve removal of proteins, while the magnetic bead type (3) (carboxyl agarose magnetic bead) showed relatively poor protein removal.
2. As can be seen from the above results, the way in which the precipitant and the magnetic beads are added together does not produce significantly different results compared to the way in which the magnetic beads and the precipitant are separately added to the sample. In other words, the way of adding together achieved the same results as addingseparately, and such results were unexpected. Compared to separate addition, adding together is more conducive to improving the processing efficiency and facilitating processing automation.

### Example 3 Evaluation of system durability of the method

The purpose is to evaluate the durability of the column performance of the sample processing method, i.e., whether the chromatography column was maintained in a normal working condition, so as to ensure that no column was clogged.

### Experimental Steps

Sample: 10 real serum samples were used for the following experiments.

The detection method was as follows. The serum samples were treated by the magnetic bead method of the present disclosure (using amino silica magnetic beads as described in Example 1) or the conventional protein precipitation method, and then the treated samples were injected into a liquid chromatography tandem mass spectrometry system (Model: AB SCIEX Triple Quad^{™} 4500MD, AB Sciex Co., Ltd.) for detection.

### (1) Magnetic bead method of the present disclosure (treatment with amino silica matrix magnetic beads)

To 250 µL of serum sample, 250 µL of acid precipitant 1 (10% TCA, internal standard: deuterium marker of vitamin B1) was added and mixed well through vortex, and then 40 µL of magnetic bead working solution was added and mixed well through vortex. After magnetic adsorption, 150 µL of supernatant was taken and injected into the machine for detection.

### (2) Control-conventional protein precipitation method

To 250 µL of serum sample, 250 µL of acid precipitant 1 (10% TCA, internal standard: deuterium marker of vitamin B1) was added and mixed well through vortex, and then 40 µL of water was added and mixed well through vortex. Centrifugation was performed at 12000 rpm-min⁻¹ for 10 min. 150 µL of supernatant was taken and injected into the machine for detection.

### Experimental results and conclusion

**Table 3 Comparison of detection results of the magnetic bead method of the present disclosure and the conventional precipitation method**

| Group | Measured concentration of vitamin B1 (ng/mL) | |
|---|---|---|
| | Conventional precipitation method | Amino magnetic bead method |
| S1 | 6.58 | 6.56 |
| S2 | 7.42 | 7.45 |
| S3 | 7.98 | 8.01 |
| S4 | 9.08 | 9.34 |
| S5 | 10.33 | 11.14 |
| S6 | 16.01 | 17.81 |
| S7 | 12.72 | 13.11 |
| S8 | 20.29 | 22.01 |
| S9 | 28.78 | 29.49 |
| S10 | 34.99 | 35.54 |

FIG. 5 shows the consistency of the measurement results of vitamin B1 content in 10 serum samples using the magnetic bead method of the present disclosure and the conventional precipitation method, respectively. In FIG. 5, the horizontal coordinate of each point represents the concentration value of a sample measured by the conventional precipitation method, and the vertical coordinate represents the concentration value of the same sample measured by the magnetic bead method of the present disclosure. Data of 10 points were subjected to linear regression, and the consistency of the results of the two measurement methods can be determined by the slope and correlation coefficient (R²) of the measured straight line equation.

### Conclusion

1. The magnetic bead method of the present disclosure provided consistent measurement results with those of the conventional protein precipitation method.
2. The magnetic bead method of the present disclosure and the protein precipitation method had no adverse effect on the performance of the chromatography column, and the column performance was stable after experiencing the conventional protein precipitation method or the magnetic bead method of the present disclosure (multiple injections). There was no clogging of the column, and the column pressure was stable.

### Example 4 Verification using samples from different sources

To verify the treatment effect on samples from different sources, plasma, serum or whole blood samples were each treated by the magnetic bead method of the present disclosure (using the amino/carboxyl silica magnetic beads described in Example 1) or the conventional protein precipitation method, and then the treated samples were injected into an HPLC-MS/MS system for detection.

### Serum and plasma samples

### (1) Amino silica magnetic beads

250 µL of serum or plasma sample was taken, added with 250 µL of acid precipitant 1 (10% TCA, internal standard: deuterium marker of vitamin B1) and mixed well through vortex for 1 min. And then 40 µL of magnetic bead working solution (amino silica magnetic beads) was added and mixed well through vortex. After magnetic adsorption, the resulting supernatant solution was taken and injected into the machine for detection.

### (2) Conventional protein precipitation method

250 µL of serum or plasma sample was taken, added with 250 µL of acid precipitant 1 (10% TCA, internal standard: deuterium marker of vitamin B1) and mixed well through vortex for 1 min. And then 40 µL of purified water was added, mixed well through vortex for 3 min and centrifugation was performed at 12000rpm-min⁻¹ for 10min. The resulting supernatant was taken, added to a 96-well V-shaped plate and detected on the machine.

### Whole Blood Sample

### (1) Amino magnetic beads

50 µL of whole blood sample was taken and added with 10 µL of 0.4 M ZnSO₄ solution, and 150 µL of acid precipitant 1 (10% TCA, internal standard: deuterium marker of vitamin B1). 20 µL of magnetic bead working solution was added. This mixture was subjected vortex for 5 min. After 1 min of magnetic adsorption, the resulting supernatant (60 µL) was taken and 60 µL of purified water was supplemented, mixed well and injected into the machine.

### (2) Conventional protein precipitation method

50 µL of whole blood sample was taken and added with 10 µL of 0.4 M ZnSO₄ solution, and 150 µL of acid precipitant 1 (10% TCA, internal standard: deuterium marker for vitamin B1). 20 µL of purified water was added. This mixture was subjected vortex for 5 min and centrifugation was performed at 12000 rpm-min⁻¹ for 10min. The resulting supernatant (60 µL) was taken and 60 µL of purified water was supplemented, mixed well and injected into the machine.

### Experimental results

### The results of serum samples are shown in Table 3 in Example 3.

The results of plasma samples are shown in Table 4. In addition, FIG. 6 shows the consistency of the measurement results of vitamin B1 content in plasma samples using the magnetic bead method of the present disclosure and the conventional precipitation method in the examples. In FIG. 6, the horizontal coordinate of each point represents the concentration value of a sample measured by the conventional precipitation method, and the vertical coordinate represents the concentration value of the same sample measured by the magnetic bead method of the present disclosure. Data of 10 points were subjected to linear regression, and the consistency of the results of the two measurement methods can be determined by the slope and correlation coefficient (R²) of the measured straight line equation.

**Table 4 Comparison of detection results of the magnetic bead method of the present disclosure and the conventional precipitation method (plasma samples)**

| Group | Measured concentration of vitamin B1 (ng/mL) | |
|---|---|---|
| | Conventional precipitation method | Amino magnetic bead method |
| S1 | 6.581 | 6.563 |
| S2 | 7.422 | 7.388 |
| S3 | 7.977 | 7.914 |
| S4 | 9.08 | 8.614 |
| S5 | 10.33 | 10.635 |
| S6 | 16.011 | 16.095 |
| S7 | 12.722 | 12.486 |
| S8 | 20.292 | 23.523 |
| S9 | 28.775 | 29.395 |
| S10 | 34.985 | 36.312 |

The results of whole blood samples are shown in Table 5. In addition, FIG. 7 shows the consistency of the measurement results of vitamin B1 content in whole blood samples using the magnetic bead method of the present disclosure and the conventional precipitation method in the examples. In FIG. 7, the horizontal coordinate of each point represents the concentration value of a sample measured by the conventional precipitation method, and the vertical coordinate represents the concentration value of the same sample measured by the magnetic bead method of the present disclosure. Data of 10 points were subjected to linear regression, and the consistency of the results of the two measurement methods can be determined by the slope and correlation coefficient (R²) of the measured straight line equation.

**Table 5 Comparison of detection results of the magnetic bead method of the present disclosure and the conventional precipitation method (whole blood sample)**

| Group | Measured concentration of vitamin B1 (ng/mL) | |
|---|---|---|
| | Conventional precipitation method | Amino magnetic bead method |
| S1 | 7.463 | 8.005 |
| S2 | 8.543 | 8.543 |
| S3 | 8.886 | 8.367 |
| S4 | 10.197 | 9.62 |
| S5 | 9.592 | 10.307 |
| S6 | 11.993 | 11.97 |
| S7 | 12.2 | 12.97 |
| S8 | 14.823 | 17.053 |
| S9 | 18.676 | 20.343 |
| S10 | 30.173 | 32.481 |

The above results showed that the measurement results for different types of samples treated by the magnetic bead method of the present disclosure are consistent with those obtained using the conventional protein precipitation method. Therefore, the magnetic bead method of the present disclosure can be effectively used for the pretreatment of different samples such as serum, plasma and whole blood.

## Claims

1. A method for treating a sample for liquid chromatography and/or mass spectrometry analysis, comprising contacting the sample with a magnetic bead with a hydrophilic surface and a precipitant to form a precipitate-magnetic bead aggregate, and applying a magnetic field to remove the precipitate-magnetic bead aggregate.

2. The method according to claim 1, wherein the magnetic bead with a hydrophilic surface is a silica magnetic bead, preferably a bare silica magnetic bead without surface modification.

3. The method according to claim 1 or 2, wherein the liquid chromatography and/or mass spectrometry are used to analyze one or more analytes in the sample, for example, the analyte is selected from the group consisting of a water-soluble analyte and a fat-soluble analyte, and the water-soluble analyte is, for example, an anionic analyte (e.g., an analyte with a carboxyl group), a cationic analyte (e.g., an analyte with an amino group), and a non-ionic analyte.

4. A method according to any one of claims 1 to 3, wherein the sample is or comprises a biological material, selected from the group consisting of whole blood, plasma, serum, urine, cerebrospinal fluid, saliva, tear, bile, gastric juice, tissue fluid and lymph fluid.

5. The method according to any one of claims 1 to 4, wherein the contacting a sample with a magnetic bead with a hydrophilic surface and a precipitant is carried out by:
(1) contacting the sample with a precipitant to form a precipitate, and contacting the precipitate with the magnetic bead with a hydrophilic surface to form a precipitate-magnetic bead aggregate, or,
(2) contacting the sample with the magnetic bead with a hydrophilic surface and the precipitant together to form a precipitate-magnetic bead aggregate.

6. The method according to any one of claims 1 to 5, wherein the contacting a sample with a magnetic bead with a hydrophilic surface and a precipitant is carried out by contacting the sample with the magnetic bead with a hydrophilic surface and the precipitant together.

7. The method according to any one of claims 1 to 6, wherein the precipitant comprises an organic solvent miscible with water (such as acetonitrile, methanol or ethanol, preferably acetonitrile).

8. The method according to any one of claims 1 to 7, wherein the applying a magnetic field to remove the precipitate-magnetic magnetic bead aggregate is carried out by placing a magnet to the outer side of the wall of a container containing the sample so that when applying a magnetic field the magnetic beads binding the precipitate are attracted to the inter side of the wall of the container, or by inserting a magnet into a container containing the sample to adsorb the magnetic beads binding the precipitate and removing the magnet.

9. The method according to any one of claims 1 to 8, wherein the magnetic field is generated by a permanent magnet or an electromagnet, for example, by control of the on-off of an electric current in an electromagnet.

10. The method according to any one of claims 1 to 9, wherein the applying a magnetic field to remove the precipitate-magnetic bead aggregate is carried out by transferring a solution from a container containing the sample and the magnetic bead, or by removing the magnetic bead binding the precipitate from a container containing the sample and the magnetic bead.

11. The method according to any one of claims 8 to 10, wherein the container is a perforated plate or a separate tube, and the perforated plate is, for example, a 2-well plate, a 4-well plate, a 6-well plate, a 12-well plate, a 24-well plate, a 48-well plate, or a 96-well plate.

12. A method for detecting a sample comprising pretreating the sample by the method according to any one of claims 1 to 11.

13. The method according to claim 12, further comprising analyzing the pretreated sample, wherein the analyzing is selected from the group consisting of mass spectrometry, liquid chromatography, liquid chromatography mass spectrometry (LC-MS) and liquid chromatography tandem mass spectrometry (LC-MS/MS).

14. The method according to claim 12 or 13, further comprising a step of mixing the sample with an internal standard solution before pretreating and analyzing.

15. A kit for use in the sample pretreatment for detection comprising a magnetic bead with a hydrophilic surface (such as a silica magnetic bead, in particular a bare silica magnetic bead with an unmodified surface) and optionally a reference substance, specifically the kit is useful in mass spectrometry or liquid chromatography.

16. The kit according to claim 15, wherein the kit is used to carry out the method according to any one of claims 1 to 14.

17. Use of a magnetic bead with a hydrophilic surface (such as a silica magnetic bead, in particular a bare silica magnetic bead without surface modification) in the sample pretreatment for mass spectrometry and/or liquid chromatography, in particular in removing protein impurities from a sample for mass spectrometry and/or liquid chromatography.
